# EUROPÄISCHE PATENTSCHRIFT

(11) **EP 1 654 086 B1**
(45) Veröffentlichungstag und Bekanntmachung des Hinweises auf die Patenterteilung: **08.08.2007**
(21) Anmeldenummer: 04730468.8
(22) Anmeldetag: 30.04.2004
(51) Int. Cl.: B23D 49/16

(54) **MOTORGETRIEBENE STICHSÄGEMASCHINE**
POWERED JIGSAW MACHINE
SCIE SAUTEUSE A MOTEUR

(30) Priorität: 23.06.2003 DE 10328061
(43) Veröffentlichungstag der Anmeldung: 10.05.2006
(73) Patentinhaber: ROBERT BOSCH GMBH, 70442 Stuttgart (DE)
(72) Erfinder: DI NICOLANTONIO, Aldo, CH-4565 Recherswil (CH)
(86) Internationale Anmeldenummer: PCT/DE2004/000904
(87) Internationale Veröffentlichungsnummer: WO 2005/000510

(56) Entgegenhaltungen:
- DE-A- 2 303 532
- DE-A- 19 805 675

## Beschreibung

### Stand der Technik

Die Erfindung geht aus von einer motorgetriebenen Stichsägemaschine mit den gattungsbildenden Merkmalen des Anspruchs 1.

Aus der DE 198 05 675 ist eine handgeführte, motorgetriebene Stichsägemaschine mit einem Pendelmechanismus bekannt. Mittels dieses Pendelmechanismus wird das in einer Hubstange gehaltene Sägeblatt über einen Rollenhebel in Schnittrichtung ausgelenkt. Diese als Pendelhub bezeichnete Auslenkung in Schnittrichtung führt zu einem schnelleren Sägefortschritt. Der Pendelhub kann mittels eines Stellknopfes eingestellt werden, wobei diskrete Einstellungen der Auslenkung nur gestuft wählbar sind. Die in jeder festen Stufe unterschiedliche maximale Auslenkung wird mittels eines Anschlags begrenzt, an den der Rollenhebel bei seiner Auslenkung anschlägt.

Je größer die Pendelung ist, desto schneller schreitet auch der Schnitt voran. Allerdings leidet die Schnittqualität darunter, weil sich Spanausrisse an den Schnittkanten und grobe Schnittflächen ergeben. Außerdem wird die Kontrolle des Schnitts mit steigender Schnittgeschwindigkeit schlechter. Die Umschaltung zwischen den einzelnen Pendelstufen über Verdrehen des Anschlags ist jedoch so aufwendig, dass es regelmäßig nicht während des Sägens durchgeführt wird. Dies wäre jedoch nötig, da sich die Anforderungen an Schnittprozesse häufig ändern. So wird für gerade Partien eine schnelle Schnittgeschwindigkeit bevorzugt, jedoch in heiklen, kurvigen Passagen oder bei einem vorsichtigen Anschneiden eine langsame Schnittgeschwindigkeit mit hoher Schnittqualität. Die beiden vorgenannten Extreme können sich immer wieder abwechseln, so dass der Benutzer ständig die Pendelung neu einstellen muss.

Aus DE 23 03 532 A ist außerdem eine Stichsägemaschine mit einer Schalt- oder Stellvorrichtung zum stufenlosen und selbsttätigen Einstellen bekannt. Das Stellrad der Stichsägemaschine ist mit einem Antrieb versehen, der abhängig von der Beschaffenheit des Schnittguts gesteuert werden kann. Der Stellradantrieb kann entweder durch manuelle Betätigung oder aber selbsttätig in Abhängigkeit von der Motorbelastung zu- und abgeschaltet werden.

### Vorteile der Erfindung

Eine erfindungsgemäße handgeführte, motorgetriebene Stichsägemaschine mit den Merkmalen des Anspruchs 1 hat dem gegenüber den Vorteil, dass der Sägefortschritt mittels einer adaptiven, automatischen Pendelung, die von der Vorschubkraft in Schnittrichtung abhängt, automatisch geändert wird.

Bevorzugt geschieht dies über ein Federelement, das umso weiter zusammengedrückt wird, je größer die Vorschubkraft, d. h. die Schnittgeschwindigkeit ist. Dies bedeutet, dass beim Sägen gerader Partien mit hoher Geschwindigkeit das Federelement sehr stark zusammengedrückt wird und somit eine große Pendelung erzielt wird. Dagegen wird beim Sägen heikler kurviger Passagen nur eine äußerst geringe Vorschubkraft am Sägeblatt angreifen, so dass das Federelement kaum zusammengedrückt wird. Dadurch ergibt sich nur eine sehr geringe Pendelung des Sägeblattes. Bevorzugt wird die Pendelung noch durch eine Dämpfvorrichtung mitgesteuert. Unter den unten im Einzelnen aufgeführten Federkräften wird jeweils die resultierende Federkraft an der Rolle verstanden, die in der Horizontalen wirkt.

Dadurch, dass oberhalb des Rollenhebels im Bereich seines rollenfernen Endes ein zweiter Anschlag am Gehäuse ausgebildet ist, kann eine maximale Pendelung vorgegeben werden. Bevorzugt wird der zweite Anschlag so ausgeführt, dass er mittels eines Stellknopfes in verschiedenen Abständen zum Rollenhebel festlegbar ist. Damit kann die maximale Pendelung in verschiedenen Stufen festgelegt werden.

Dadurch, dass die Stichsägemaschine einen Ausschaltmechanismus aufweist, insbesondere eine mechanische Vorrichtung zum Zusammendrücken des Federelements, der die parallele Komponente des Federelements unterdrückt, kann die automatische Pendelung sehr leicht ausgeschaltet werden. Beispielsweise ist es dann möglich, zwischen einem aus dem Stand der Technik bekannten Pendelmechanismus und dem erfindungsgemäßen Pendelmechanismus sehr einfach hin und her zu schalten.

Weitere vorteilhafte Ausgestaltungen der Erfindung sind Gegenstand der Unteransprüche.

### Zeichnungen

Ein Ausführungsbeispiel der Erfindung ist in der nachstehenden Beschreibung an Hand der zugehörigen Zeichnung näher erläutert.

Die Figuren zeigen:
Figur 1 einen vertikalen Längsschnitt durch eine erfindungsgemäße Stichsägemaschine,
Figur 2 einen vertikalen Querschnitt durch die Stichsägemaschine gemäß der Fig. 1 in Richtung II-II,
Figur 3 einen horizontalen Längsschnitt durch die Stichsägemaschine aus Fig. 1 entlang der Linie III-III,
Figur 4 einen schematischen Aufbau eines Rollenmechanismus gemäß dem Stand der Technik samt zeitlichen Verlaufs der Auslenkung und
Figur 5 einen schematischen Aufbau eines erfindungsgemäßen Pendelmechanismus samt zeitlichen Verlaufs der Auslenkung.

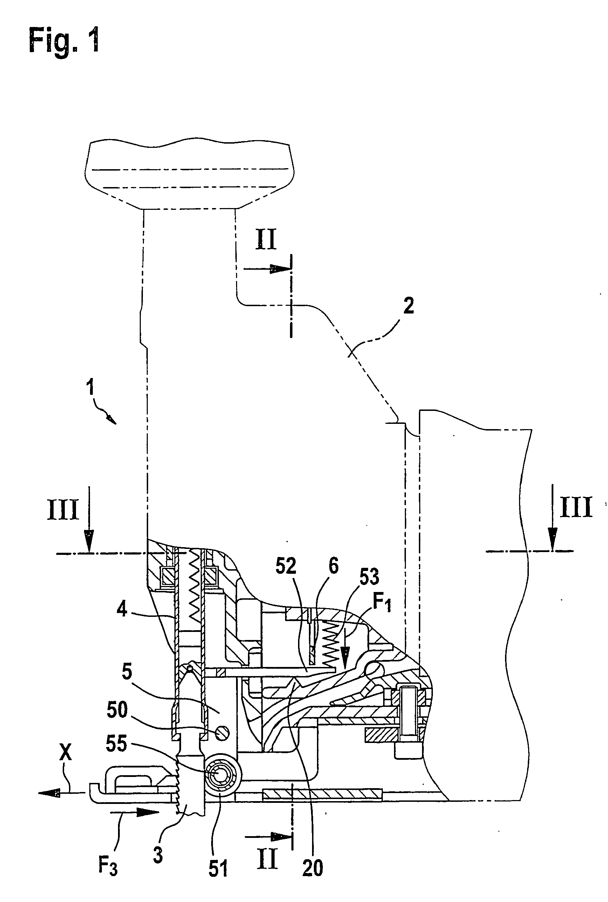

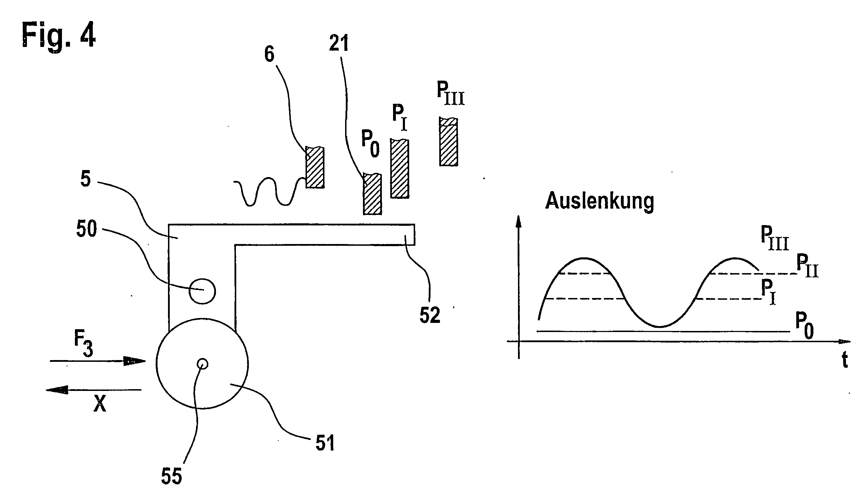

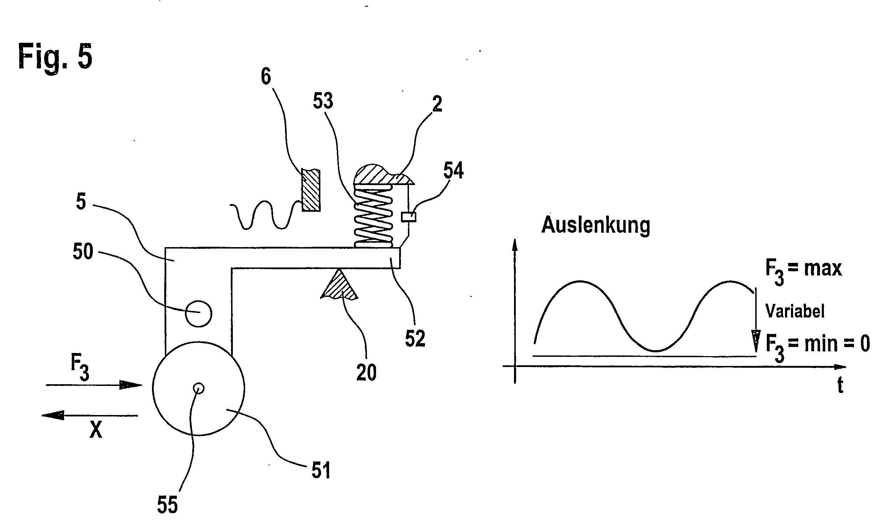

Anhand der Schnitte der Figuren 1 bis 3 kann eine handgeführte, motorgetriebene, erfindungsgemäße Stichsägemaschine 1 gut beschrieben werden. Der für eine Pendelung bislang benutzte Mechanismus ist in Fig. 4 dargestellt und in Fig. 5 wird der erfindungsgemäße Pendelungsmechanismus in einer sehr einfachen Ausführungsform wiedergegeben.

Die in Fig. 1 dargestellte Stichsägemaschine 1 weist ein Gehäuse 2 auf, in dem ein Sägeblatt 3 in vertikaler Richtung hin- und herbewegt wird. Dazu ist das Sägeblatt 3 in einer Hubstange 4 angeordnet, die in bekannter Art und Weise von einem Motor in eine vertikale Hin- und Herbewegung versetzt wird. Da sowohl der Antrieb der Hubstange 4 als auch die Lagerung und Führung derselben bekannt sind und nicht Gegenstand der Erfindung sind, wird auf eine nähere Ausführung verzichtet. Die Stichsägemaschine 1 weist einen Pendelmechanismus auf, der der Hubstange 4 mit dem Sägeblatt 3 quer zur vertikalen Hin- und Herbewegung eine Pendelung erteilt. Dies führt bei einer Bewegung der Stichsägemaschine 1 in einer Bearbeitungsrichtung x zu einem höheren Spanabtrag und damit zu einem schnelleren Sägefortschritt. Ein solcher Pendelmechanismus ist grundsätzlich bekannt. Im Folgenden wird zuerst auf den Pendelmechanismus gemäß dem Stand der Technik eingegangen (siehe Fig. 4) bevor dann auf den erfindungsgemäßen Pendelmechanismus eingegangen wird (siehe u. a. Fig. 5).

Der bekannte Pendelmechanismus weist einen zweiarmigen Rollenhebel 5 auf, der wippenartig um eine horizontale erste Achse 50 drehbar im Gehäuse 2 gelagert ist. Am unteren Ende des ersten Hebelarms weist der Rollenhebel 5 eine um eine zweite horizontale Achse 55 drehbar gelagerte Rolle 51 auf. Sein zweiter Hebelarm ist um 90 Grad abgewinkelt, so dass das rollenferne Ende 52 horizontal verläuft. Dabei sucht eine Druckfeder 53 den oberen Hebelarm in Ruheposition des Rollenhebels 5 nach unten gegen einen ersten Anschlag 20 vorgespannt zu halten.

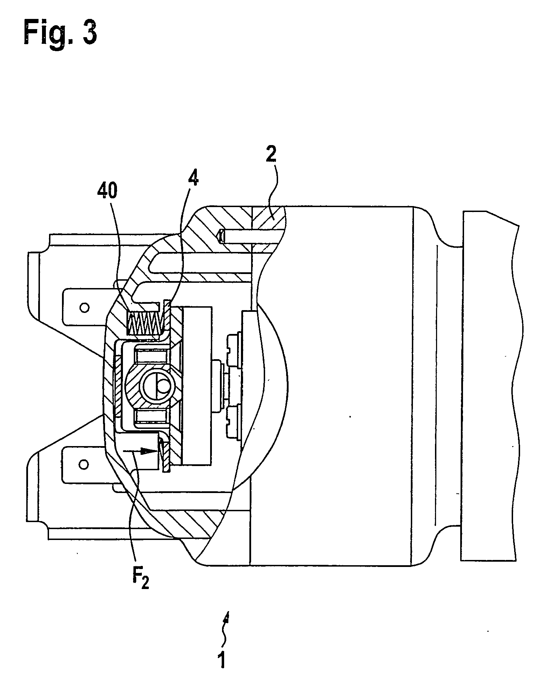

Wird die Stichsägemaschine 1 in der Bearbeitungsrichtung x gegen ein Werkstück bewegt, so dass eine Vorschubkraft F₃ auf das Sägeblatt 3 wirkt, drückt dieses die Rolle 51 und somit den ersten Hebelarm des Rollenhebels 5 nach hinten. Dabei wird das Sägeblatt 3 zugleich über Druckfedern 40, die zwischen dem Gehäuse 2 und der Hubstange 4 mit einer Anpressfederkraft F₂ wirken (siehe Fig. 3), ständig gegen die Rolle 51 gedrückt.

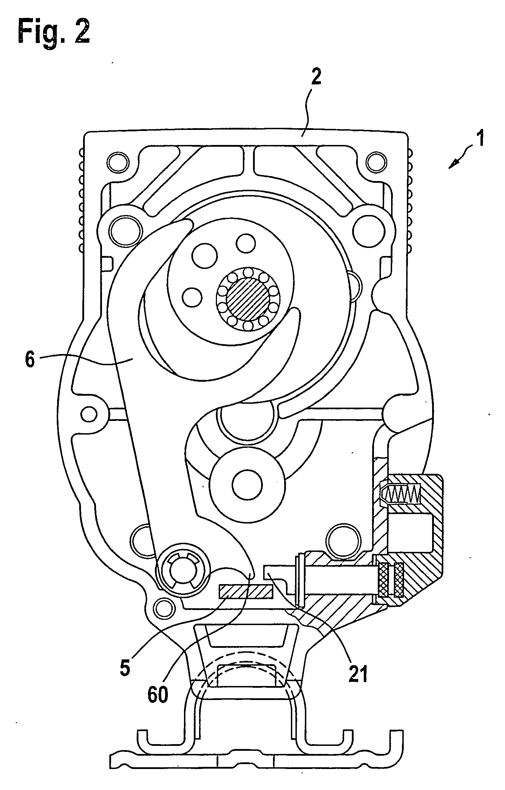

Eine Nase 60 (Fig. 2) eines Gabelhebels 6 stützt sich am rollenfernen Ende 52 des Rollenhebels 5 ab. Der Gabelhebel 6 wird von einem Antriebsmotor (nicht gezeigt) über einen Exzenter periodisch hin- und herbewegt und vollführt eine Auf- und Abbewegung (siehe Fig. 2 und 4). Dadurch wird das rollenferne Ende 52 des Rollenhebels 5 periodisch nach oben bzw. unten ausgelenkt (siehe Fig. 4 zeitlicher Verlauf der Auslenkung). Dies bedeutet, wenn die Nase 60 des Gabelhebels 6 den Rollenhebel 5 nach unten drückt, wird die Rolle 51 entgegen der Vorschubkraft F₃ in Richtung der Bearbeitungsrichtung x gedrückt, so dass das Sägeblatt 3 einen schnellen Sägefortschritt vollführt.

Da eine starke Pendelung für schnellen Sägefortschritt jedoch den Nachteil geringerer Schnittqualität mit sich bringt, ist diese nur für das Sägen gerader Strecken geeignet und sollte bei filigranen oder stark gekrümmten Schnittkurven gering gehalten werden. Dafür ist ein zweiter Anschlag 21 (siehe Fig. 2 und 4) vorgesehen.

Dieser begrenzt nach oben hin die maximale Auslenkung des rollenfernen Endes 52 des Rollenhebels 5 durch seinen Abstand von der Ruheposition des rollenfernen Endes 52 und schränkt den Pendelhub des Sägeblatts 3 ein. Bei einer solchen Hubbeschränkung des Rollenhebels 5 bleibt der konstante Auslenkungshub der Nase 60 des Gabelhebels 6 größer als der des Rollenhebels 5 und es erfolgt nur ein kleinerer Sägefortschritt als maximal möglich.

Der zweite Anschlag 21 ist in unterschiedlichen Abständen zum rollenfernen Ende 52 des Rollenhebels 5 mittels eines Einstellknopfes von außen manuell festlegbar. Im linken Teil der Fig. 4 sind exemplarisch drei Stellungen (P₀, P_{I}, P_{III}) mit unterschiedlichen Abständen zum rollenfernen Ende 52 des Rollenhebels 5 dargestellt. Zur Vereinfachung der Darstellung sind diese Positionen nebeneinander dargestellt. Je nach mechanischer Ausführung des zweiten Anschlags 21 sind diese jedoch entweder alle übereinander angeordnet oder in einem sehr engen horizontalen Bereich nebeneinander. Die Auswirkung auf den zeitlichen Verlauf der Auslenkung des rollenfernen Endes 52 des Rollenhebels ist für die 4 Stellungen (P₀ bis P_{III}) des zweiten Anschlags 21 im rechten Teil der Fig. 4 dargestellt. Bei der kleinsten Stellung P₀ erfolgt gar keine Pendelung, dagegen ist bei der weitesten Einstellung P_{III} die volle Pendelung möglich, die sich durch eine sinusförmige Kurve der zeitlichen Darstellung der Auslenkung manifestiert. Bei den Zwischenstellungen P_{I}, P_{II} werden die Maxima der Auslenkung jeweils vertikal in der Höhe abgeschnitten, in der sich der zweite Anschlag 21 in der jeweiligen Position P_{I}, P_{II} oberhalb des rollenfernen Endes 52 des Rollenhebels 5 in seiner neutralen Position befindet.

Bei einem erfindungsgemäßen Pendelmechanismus gemäß Fig. 5 erfolgt die Bewegung des Rollenhebels 5 ebenfalls über den Gabelhebel 6 in bekannter Art und Weise. Die Auslenkung durch die Vorschubkraft F₃ ist ebenfalls wie im bekannten Pendelmechanismus gegeben. Unterhalb des rollenfernen Endes 52 des Rollenhebels 5 ist am Gehäuse 2 ein erster Anschlag 20 (siehe Fig. 1 und 5) angeordnet. Ebenfalls im Bereich des rollenfernen Endes 52 des Rollenhebels 5 ist ein Federelement, stellvertretend in Form einer Feder 53, mit einer Federkraft F₁ zwischen dem Gehäuse 2 und dem Rollenhebel 5 angeordnet. Die Feder 53 wirkt in derselben Richtung wie der Gabelhebel 6 auf den Rollenhebel 5. Zwischen dem Gehäuse 2 und dem rollenfernen Ende 52 des Rollenhebels 5 ist darüber hinaus noch eine Dämpfvorrichtung 54 zur Dämpfung der Schwingung des Rollenhebels 5 angeordnet. Die Federkraft F₁ der Feder 53 ist dabei größer als die Anpressfederkraft F₂ der Anpressfedern 40 (siehe Fig. 3).

Solange die Vorschubkraft F₃ kleiner ist als die Differenz aus der Federkraft F₁ und der Anpressfederkraft F₂, drückt die Feder 53 das rollenferne Ende 52 konstant gegen den ersten Anschlag 20. Damit erfolgt keine Pendelung. Dies entspricht dem bekannten Pendelmechanismus (siehe Fig. 4) in der Stellung P₀ des zweiten Anschlags 21. Wird die Vorschubkraft F₃ langsam erhöht, so wird die Feder 53 zusammengedrückt und die Nase 60 des Gabelhebels 6 erteilt dem rollenferne Ende 52 des Rollenhebels 5 eine periodische Bewegung nach oben und unten. Die Feder 53 versucht das rollenferne Ende 52 des Rollenhebels 5 gegen den ersten Anschlag 20 zu drücken. Dadurch erhält man einen geringen Sägefortschritt. Je größer die Vorschubkraft F₃ wird, desto größer wird auch die Auslenkung des rollenfernen Endes 52 des Rollenhebels 5 gegen die Federkraft F₁ der Feder 53. Dadurch erhält man einen immer größer werdenden Sägefortschritt im Rahmen des vorwählbaren maximalen Pendelhubs. Liegt die Vorschubkraft F₃ über einem vorgegebenen Wert der Differenz zwischen der Federkraft F₁ der Feder 53 und der Anpressfederkraft F₂ der Anpressfedern 40, dann erfolgt die maximale Auslenkung des Rollenhebels 5, was der Pendelstufe P_{III} des zweiten Anschlags 21 (siehe Fig. 4) entspricht.

Der oben beschriebene erfindungsgemäße Pendelmechanismus hat gegenüber dem Stand der Technik den Vorteil, dass er sich adaptiv auf die Gegebenheiten des aktuell benötigten Sägefortschritts einstellt. Bei einem geraden Schnitt wird die Stichsägemaschine 1 mit einer hohen Geschwindigkeit in der Bearbeitungsrichtung x bewegt, so dass eine hohe Vorschubkraft F₃ erzeugt wird. Dies bedeutet (siehe oben), dass ein starker Andruck auf das Sägeblatt ausgeübt wird und dadurch ein stärkeres Pendeln stattfindet, so dass ein besonders schneller Sägefortschritt erreicht wird. Dagegen wird beim Sägen von stark gekrümmten bzw. filigranen Konturen nur eine äußerst geringe Vorschubkraft F₃ erreicht, da die Stichsägemaschine 1 nur mit sehr geringer Geschwindigkeit in Richtung der Bearbeitungsrichtung x bewegt wird. Liegt die Vorschubkraft F₃ dabei unterhalb der Differenz zwischen der Federkraft F₁ der Feder 53 und der Anpressfederkraft F₂ der Anpressfedern 40, so findet überhaupt kein Pendeln des Sägeblatts statt, was mit einem geringen Sägefortschritt verbunden ist und zu einer sehr hohen Schnittpräzision führt.

Der erfindungsgemäße Pendelmechanismus kann mit einem oben beschriebenen zweiten Anschlag 21 (siehe Fig. 2 und 4) kombiniert werden, so dass auf alle Fälle auch bei hoher Vorschubkraft F₃ eine vorgebbare maximale Pendelung mit maximalem Sägefortschritt gegeben ist.

## Patentansprüche

1. Motorgetriebene Stichsägemaschine (1) mit einem Gehäuse (2), in dem eine ein Sägeblatt (3) tragende, längsbewegbare Hubstange (4) sowie ein Pendelmechanismus angeordnet sind, mit dessen Hilfe dem Sägeblatt (3) ein quer zur Längsbewegung gerichteter variierbarer Pendelhub erteilbar ist, wobei der Pendelhub stufenlos, betriebsabhängig zwischen Maximal- und Minimalhub automatisch während des Sägevorgangs einstellbar ist, **dadurch gekennzeichnet, dass** der Pendelhub abhängig vom Andruck des Sägeblattes (3) an ein zu sägendes Werkstück steuerbar ist.

2. Stichsägemaschine nach Anspruch 1, **dadurch gekennzeichnet, dass** deren Pendelmechanismus einen um eine horizontale erste Achse (50) drehbar im Gehäuse (2) angeordneten Rollenhebel (5) aufweist, an dem eine mit dem Sägeblatt (3) in Kontakt stehende, um eine horizontale zweite Achse (55) drehbare Rolle (51) angeordnet ist, und der einen Gabelhebel (6) aufweist, der den Rollenhebel (5) periodisch auslenkt.

3. Stichsägemaschine nach Anspruch 2, **dadurch gekennzeichnet, dass** der Pendelmechanismus ein Federelement (53) enthält, das zwischen dem rollenfernen Ende (52) des Rollenhebels (5) und dem Gehäuse (2) angeordnet ist und mit einer parallelen Komponente zur Auslenkrichtung des Gabelhebels (6) wirkt.

4. Stichsägemaschine nach Anspruch 3, **dadurch gekennzeichnet, dass** parallel zum Federelement (53) eine Dämpfvorrichtung (54) zwischen dem rollenfernen Ende (52) des Rollenhebels (5) und dem Gehäuse (2) angeordnet ist.

5. Stichsägemaschine nach einem der Ansprüche 2-4, **dadurch gekennzeichnet, dass** unterhalb des Rollenhebels (5) im Bereich seines rollenfernen Endes (52) ein erster Anschlag (20) am Gehäuse (2) ausgebildet ist.

6. Stichsägemaschine nach einem der Ansprüche 2-5, **dadurch gekennzeichnet, dass** oberhalb des Rollenhebels (5) im Bereich seines rollenfernen Endes (52) ein zweiter Anschlag (21) am Gehäuse (2) ausgebildet ist.

7. Stichsägemaschine nach Anspruch 6, **dadurch gekennzeichnet, dass** der zweite Anschlag (21) in verschiedenen Abständen zum Rollenhebel (5) festlegbar ist.

8. Stichsägemaschine nach Anspruch 7, **dadurch gekennzeichnet, dass** der zweite Anschlag (21) in diskreten Abständen zum Rollenhebel (5) manuell festlegbar ist.

9. Stichsägemaschine nach einem der vorstehenden Ansprüche, **dadurch gekennzeichnet, dass** das Sägeblatt (3) über eine Anpressfeder (40) gegen die Rolle (51) gedrückt wird, deren Anpressfederkraft (F₂) kleiner ist als die Federkraft (F₁) des Federelements (53).

10. Stichsägemaschine nach einem der Ansprüche 9, **dadurch gekennzeichnet, dass** eine Auslenkung des Rollenhebels (5) erst erfolgt, wenn die Vorschubkraft (F₃) der Stichsägemaschine (1) größer ist als die Differenz zwischen der Federkraft (F₁) und der Anpressfederkraft (F₂).

11. Stichsägemaschine nach einem der Ansprüche 3-10, **dadurch gekennzeichnet, dass** sie einen Ausschaltmechanismus aufweist, insbesondere eine mechanische Vorrichtung zum Zusammendrücken des Federelements (53), der die parallele Komponente des Federelements (53) unterdrückt.

## Claims

1. Powered jigsaw machine (1) having a housing (2) in which a longitudinally movable stroke rod (4) carrying a saw blade (3) and a pendulum mechanism are arranged, by means of which pendulum mechanism a variable pendulum stroke directed transversely to the longitudinal movement can be imparted to the saw blade (3), the pendulum stroke being automatically adjustable in an infinitely variable manner between maximum and minimum stroke, as a function of the operating mode, during the sawing process, **characterized in that** the pendulum stroke can be controlled as a function of the pressure of the saw blade (3) against a workpiece to be sawn.

2. Jigsaw machine according to Claim 1, **characterized in that** its pendulum mechanism has a roller lever (5) which is rotatably arranged in the housing (2) about a horizontal first axis (50) and on which a roller (51) in contact with the saw blade (3) and rotatable about a horizontal second axis (55) is arranged and which has a forked lever (6) which periodically deflects the roller lever (5).

3. Jigsaw machine according to Claim 2, **characterized in that** the pendulum mechanism contains a spring element (53) which is arranged between the end (52) of the roller lever (5) remote from the roller and the housing (2) and acts with a component parallel to the deflection direction of the forked lever (6).

4. Jigsaw machine according to Claim 3, **characterized in that** a damping device (54) is arranged parallel to the spring element (53) between the end (52) of the roller lever (5) remote from the roller and the housing (2).

5. Jigsaw machine according to one of Claims 2 to 4, **characterized in that** a first stop (20) is formed on the housing (2) below the roller lever (5) in the region of its end (52) remote from the roller.

6. Jigsaw machine according to one of Claims 2 to 5, **characterized in that** a second stop (21) is formed on the housing (2) above the roller lever (5) in the region of its end (52) remote from the roller.

7. Jigsaw machine according to Claim 6, **characterized in that** the second stop (21) can be located at various distances from the roller lever (5).

8. Jigsaw machine according to Claim 7, **characterized in that** the second stop (21) can be manually located at discrete distances from the roller lever (5).

9. Jigsaw machine according to one of the preceding claims, **characterized in that** the saw blade (3) is pressed against the roller (51) via a pressure spring (40), the pressure spring force (F₂) of which is less than the spring force (F₁) of the spring element (53).

10. Jigsaw machine according to one of the preceding claims, **characterized in that** the roller lever (5) is not deflected until the feed force (F₃) of the jigsaw machine (1) is greater than the difference between the spring force (F₁) and the pressure spring force (F₂).

11. Jigsaw machine according to one of Claims 3 to 10, **characterized in that** it has a cut-out mechanism, in particular a mechanical device for compressing the spring element (53), which suppresses the parallel component of the spring element (53).

## Revendications

1. Scie sauteuse à moteur (1) comprenant un boîtier (2) dans lequel sont disposés une tige de poussoir (4) mobile longitudinalement portant une lame de scie (3) ainsi qu'un mécanisme d'oscillation permettant de conférer à la lame de scie (3) une course d'oscillation variable orientée transversalement par rapport au mouvement longitudinal, la course d'oscillation étant réglable automatiquement pendant le processus de sciage, de façon progressive, en fonction du fonctionnement, entre la course maximale et la course minimale,
**caractérisée en ce que**
la course d'oscillation est commandée en fonction de la pression de la lame de scie (3) contre la pièce à scier.

2. Scie sauteuse selon la revendication 1,
**caractérisée en ce que**
son mécanisme d'oscillation présente un levier à galet (5) pouvant tourner autour d'un premier axe horizontal (50) dans le boîtier (2), et portant un galet (51) en contact avec la lame de scie (3) et rotatif autour d'un deuxième axe horizontal (55), et un levier à fourche (6) qui bascule périodiquement le levier à galet (5).

3. Scie sauteuse selon la revendication 2,
**caractérisée en ce que**
le mécanisme d'oscillation contient un élément de ressort (53) entre l'extrémité (52) éloignée du galet du levier à galet (5) et le boîtier (2), et qui agit avec une composante parallèle à la direction de basculement du levier à fourche (6).

4. Scie sauteuse selon la revendication 3,
**caractérisée en ce que**
parallèlement à l'élément de ressort (53), un dispositif d'amortissement (54) est disposé entre l'extrémité (52) éloignée du galet du levier à galet (5) et le boîtier (2).

5. Scie sauteuse selon l'une des revendications 2 à 4,
**caractérisée en ce qu'**
en dessous du levier à galet (5), dans la zone de son extrémité (52) éloignée du galet, une première butée (20) est formée sur le boîtier (2).

6. Scie sauteuse selon l'une des revendications 2 à 5,
**caractérisée en ce qu'**
au-dessus du levier à galet (5), dans la zone de son extrémité (52) éloignée du galet, une deuxième butée (21) est formée sur le boîtier (2).

7. Scie sauteuse selon la revendication 6,
**caractérisée en ce que**
la deuxième butée (21) peut être fixée à différentes distances par rapport au levier à galet (5).

8. Scie sauteuse selon la revendication 7,
**caractérisée en ce que**
la deuxième butée (21) peut être fixée manuellement à des distances discrètes par rapport au levier à galet (5).

9. Scie sauteuse selon l'une des revendications précédentes,
**caractérisée en ce que**
la lame de scie (3) est poussée contre le galet (51) par un ressort de pression (40), dont la force de ressort de pression (F₂) est inférieure à l'élasticité (F₁) de l'élément de ressort (53).

10. Scie sauteuse selon la revendication 9,
**caractérisée en ce qu'**
un basculement du levier à galet (5) se produit seulement lorsque la force d'avance (F₃) de la scie sauteuse (1) est supérieure à la différence entre l'élasticité (F₁) et la force de ressort de pression (F₂).

11. Scie sauteuse selon l'une des revendications 3 à 10,
**caractérisée en ce qu'**
elle présente un mécanisme de désactivation, en particulier un dispositif mécanique de compression de l'élément de ressort (53), qui supprime la composante parallèle de l'élément de ressort (53).
